# EUROPÄISCHE PATENTANMELDUNG

(11) **EP 1 294 140 A2**
(43) Veröffentlichungstag der Anmeldung: **19.03.2003**
(21) Anmeldenummer: 02018865.2
(22) Anmeldetag: 23.08.2002
(51) Int. Cl.: H04L 12/56, H04L 12/28, H04L 29/06

(54) **Verfahren zur Ausführung von auf dem Internet-Protokoll (IP) basierten Anwendungen mit Dienstgüte in heterogenen Zugangsfunknetzen**

(30) Priorität: 06.09.2001 DE 10143795
(71) Anmelder: Deutsches Zentrum für Luft- und Raumfahrt e.V., 51147 Köln (DE)
(72) Erfinder: Jahn, Axel, Dr., 82110 Germering (DE); Holzbock, Matthias, Dipl.-Ing., 80807 München (DE)
(74) Vertreter: von Kirschbaum, Albrecht, Dipl.-Ing.

(57) **Zusammenfassung**

Zum Ausführen IP-basierter Anwendungen mit Dienstgüte (QoS; Quality of Service) in einem mehrere verschiedene Zugangsfunknetze, wie z.B. GSM, enthaltenden, heterogenen Zugangsfunknetz auf Benutzer-Endgeräten, die individuell mobil sind oder einem kollektiv mobilen Benutzernetzwerk angehören, werden beim Bereitstellen der Dienstgüte (QoS; Quality of Service) Erweiterungen der Dienstgüte bzw. von Dienstgüte-Parametern für Anwendungen, die von einem Benutzer zur Durchführung in dessen Benutzer-Endgerät gewünscht werden, auf einer Übergangseinheit ausgeführt, ohne dass eine Initialisierung vom jeweiligen Benutzer-Endgerät aus vorzunehmen ist. Die Übergangseinheit liegt zwischen dem mobilen Benutzer-Endgerät bzw. dem kollektiv mobilen Benutzernetzwerk und Übertragungseinrichtungen der Zugangsfunknetze. Hierbei dient die Übergangseinheit der Übernahme von Mobilitätsmanagementaufgaben, so dass aktive Datenverbindungen beim Wechsel des Benutzer-Endgeräts bzw. des kollektiv mobilen Benutzernetzwerkes von einem Zugangsfunknetz zu einem anderen ohne Benutzereingriff aufrechterhalten werden. Das Verfahren wird beim Zugriff auf IP-basierte Anwendungen in heterogenen Mobilfunk-Zugangsnetzen eingesetzt.

## Beschreibung

Die Erfindung betrifft ein Verfahren zur Ausführung von auf dem Internet-Protokoll (IP) basierten Anwendungen mit Dienstgüte (QoS; Quality of Service) in einem mehrere verschiedene Zugangsfunknetze, wie z.B. GSM, enthaltenden, heterogenen Zugangsfunknetz auf Benutzer-Endgeräten, die individuell mobil sind oder einem kollektiv mobilen Benutzernetzwerk (mobiles LAN; mobiles Local Area Network) angehören.

Zukünftige Mobilfunknetze, wie z.B. UMTS, werden neue Dienste und größere Datenraten ermöglichen. Darüber hinaus etabliert sich zur Zeit eine Vielzahl inkompatibler Funknetzstandards, wie beispielsweise GSM, UMTS, Wireless LAN und Bluetooth. Im Gegensatz dazu ist aber der Trend ersichtlich, für immer mehr Dienste das Internet-Protokoll (IP) als Transportprotokoll zu Grunde zu legen.

Im heutigen Internet wird im allgemeinen keine Gewichtung des entstehenden Verkehrs vorgenommen und es kann somit keine Dienstgüte (QoS; Quality of Service) garantiert werden. Erste Realisierungen von IP-Erweiterungen sind Integrated Services (IntServ) [B. Braden, D. Clark, S. Shenker: "Integrated Services in the Internet", IETF RFC 1633, Juni 1994], Differentiated Services (DiffServ) [K. Nicolas, St. Blake: "Differentiated Services Operational Model and Definitions", IETF, Februar 1998], Resource Reservation Protocol (RSVP) [B. Braden, L. Zhang, St. Berson, S. Herzog, J. Jamin: "Resource Reservation Protocol (RSVP)", IETF RFC 2205, September 1997] oder Gauge and Gate Reservation with Independent Probing (GRIP) [N. Blefari-Melazzi, M. Femminella, G. Reali: "Dynamic Bandwidth Allocation in a Circuit-Switched Satellite Network: Provision of Deterministic and Statistical QoS guarantees", IEEE INFOCOM 2000, Tel-Aviv, Israel, März 2000 und G. Bianchi, A. Capone, C. Petrioli: "Packet management techniques for measurement based end-to-end admission in IP networks", Journal of Communication Network, Juni 2000].

Diese IP-Erweiterungen erlauben aufgrund von Verkehrsmessungen, Reservierung von Bandbreite und Einfügen von Priorisierungsfeldern (ToS; Type of Service) in das IP-Paket eine Unterscheidung des Datenverkehrs und damit eine Garantie von voreingestellten Dienstgüte(QoS)-Parametern, wie Datenrate, maximale Verzögerungszeiten oder ähnlichem.

Um aber als Benutzer davon zu profitieren, müssen speziell für Dienstgüte (QoS) bestimmte Anwendungen ausgeführt werden. Dazu sind nicht unerhebliche Modifikationen der Anwendungen oder der Betriebssystem-Software nötig. Bisher sind keine allgemein gebräuchlichen Anwendungen, die Dienstgüte (QoS) unterstützen, bekannt.

Beim Verfahren nach der Erfindung wird davon ausgegangen, dass in einem heterogenen oder auch hybriden Zugangsfunknetz mehrere verschiedene Zugangsfunknetze vorhanden sind, die sich auch als Netzsegmente bezeichnen lassen und die von terrestrischer Art, aber auch Satellitennetze sein können. Diese Netzsegmente, z.B. GSM, sind über sogenannte Zugangsnetzwerkknoten (ER; Edge Router) an das Internet angeschlossen.

Der Erfindung liegt vor allem die Aufgabe zu Grunde, in heterogenen Zugangsfunknetzen unabhängig von der gewünschten Anwendung, vom Benutzer-Endgerät und vom verfügbaren Zugangsfunknetz Dienstgüte sowohl in individuellen Benutzer-Endgeräten als auch in kollektiv mobilen Benutzernetzwerken, also in mobilen Benutzer-LANs zur Verfügung zu stellen. Modifikationen der Anwendungen oder der Betriebssystem-Software sollen dabei nicht erforderlich sein, genauso wenig wie das Erfordernis von speziell für Dienstgüte bestimmten Anwendungen.

Gemäß der Erfindung, die sich auf ein Verfahren der eingangs genannten Art bezieht, wird diese Aufgabe dadurch gelöst, dass bei der Bereitstellung der Dienstgüte (QoS; Quality of Service) Erweiterungen der Dienstgüte bzw. von Dienstgüte-Parametern für Anwendungen, die von einem Benutzer zur Durchführung in dessen Benutzer-Endgerät gewünscht werden, auf einer jeweils zugeordneten Übergangseinheit (IWU; Interworking Unit) ausgeführt werden, ohne dass eine Initialisierung vom jeweiligen Benutzer-Endgerät aus vorgenommen wird. Hierbei übernimmt die Übergangseinheit (IWU), die zwischen dem Benutzer-Endgerät bzw. dem kollektiv mobilen Benutzernetzwerk auf der einen Seite und Übertragungseinrichtungen der Zugangsfunknetze auf der anderen Seite liegt, außerdem Mobilitätsmanagementaufgaben und dafür sorgt, dass aktive Datenverbindungen beim Wechsel des Benutzer-Endgeräts bzw. des kollektiv mobilen Benutzernetzwerkes von einem Zugangsfunknetz zu einem anderen ohne Benutzereingriff aufrechterhalten werden.

Beim Verfahren nach der Erfindung wird somit in Benutzer-Endgeräten und in kollektiv mobilen Benutzer-LANs unabhängig von der gewünschten IP-basierten Anwendung, vom Benutzer-Endgerät und von den verfügbaren Zugangsfunknetzen Dienstgüte zur Verfügung gestellt.

Um IP-basierte Anwendungen auf allgemein gebräuchlichen Benutzer-Endgeräten über diese Vielzahl von Zugangsfunknetzen unter der Voraussetzung zu ermöglichen, dass der Benutzer über die Grenzen der Abdeckungszonen der einzelnen Zugangsfunknetze mobil sein darf, werden die Übergangseinheiten (IWU; Interworking Unit) eingesetzt. Beim Wechsel des Zugangsfunknetzes werden damit aktive Datenverbindungen aufrechterhalten, ohne dass ein Benutzereingriff nötig ist.

Eine solche Übergangseinheit (IWU) übernimmt die Funktion des Mobilitätsmanagements und liegt zwischen dem Benutzer-Endgerät bzw. mehreren knotenmäßig zusammengefaßten Benutzer-Endgeräten (MN; Mobile Nodes) und den Übertragungseinrichtungen der Zugangsfunknetze. Die verschiedenen Zugangsfunknetze, z.B. GSM, werden als Netzsegmente und die entsprechenden mobilen Übertragungseinheiten als Segment-Endgeräte bezeichnet. Diese beinhalten eine Übertragungsfrequenz-Komponente mit Antenne und Konverter sowie ein Modem mit digitaler Datenschnittstelle, beispielsweise einen GSM-Chip und eine Antenne. Die Übergangseinheit (IWU) beinhaltet ein oder mehrere Segment-Endgeräte.

An die Übergangseinheit (IWU) kann ein Benutzer-Endgerät angeschlossen werden. Es lassen sich aber auch mehrere Benutzer-Endgeräte anschließen. Werden mehrere Benutzer-Endgeräte angeschlossen, so spricht man von einem kollektiv mobilen Benutzernetzwerk, das sich auch kurz als mobiles Benutzer-LAN bezeichnen läßt.

Ein solches kollektiv mobiles Benutzernetzwerk kann z.B. in Flugzeugen, Zügen oder Automobilen eingerichtet sein. Dabei können die Benutzer-Endgeräte entweder fest mit dem kollektiv mobilen Benutzernetzwerk verbunden sein, wie z.B. im Falle einer Fahrer-Informationseinheit, oder aber auch zeitweilig in das kollektiv mobile Benutzernetzwerk eingebracht werden, wie z.B. im Falle des Laptops eines Reisenden.

Vorteilhafte und zweckmäßige Weiterbildungen des Verfahrens nach der Erfindung sind in den Unteransprüchen angegeben, die sich unmittelbar oder mittelbar auf den Patentanspruch 1 beziehen.

In vorteilhafter Weise wird die Übergangseinheit (IWU) als Web-Benutzerportal eingesetzt und als HTTP-Server verwendet. Das Benutzerportal startet Plug-In-Komponenten auf den Web-Browsern der Klienten, nachdem Anmelde-Verfahren erfolgreich durchgeführt wurden.

Ein Benutzer-Portal auf der Übergangseinheit (IWU) stellt vorteilhaft abhängig von den verfügbaren Netzsegmenten eine Liste von Dienstgüten zur Verfügung, die mit lokal auf dem Benutzer-Endgerät installierten Applikationen verknüpft werden können. In zweckmäßiger Weise kann auch eine Liste allgemein gebräuchlicher Anwendungen mit voreingestellten Dienstgüte-Parametern Verwendung finden. In diesem Fall wird dann bei Wahl einer Anwendung aus dieser Liste die Ausführbarkeit der ausgewählten Anwendung auf dem Benutzer-Endgerät geprüft.

Löst ein Benutzer den Start einer Anwendung mit Dienstgüte über die Übergangseinheit (IWU) aus, so werden die bereitstehenden Zugangsnetzsegmente auf die Verfügbarkeit der geforderten Dienstgüte untersucht.

Dabei werden von der Übergangseinheit (IWU) abhängig von jeweiligen Netzsegment die im betreffenden Netzsegment verwendeten Dienstgüteprozeduren ausgeführt, wie z.B. Connection Admission Control und Reservierung. Bei Verfügbarkeit der geforderten Dienstgüte wird mittels Rückmeldung von der Übergangseinheit (IWU) zum Benutzer-Endgerät in letzterem die entsprechende Anwendung gestartet.

Ergänzungen und Änderungen, die aufgrund der Dienstgüteprozeduren (z.B. Veränderung oder Einfügen des Priorisierungsfeldes, d.h. des ToS-Feldes) an den IP-Paketen dieser Anwendung gemacht werden müssen, werden entweder beim Passieren dieser IP-Pakete von der Übergangseinheit (IWU) oder mittels einer Filterfunktion vorgenommen, die beim Aufruf von Anwendungen mit Dienstgüte von der Übergangseinheit (IWU) auf das Benutzer-Endgerät installiert und lokal auf dem Benutzer-Endgerät ausgeführt wird.

Mit dem erfindungsgemäß arbeitenden Verfahren werden zusammengefaßt folgende Vorteile erreicht:
- die Dienstgüte (QoS) für IP-basierte Anwendungen in individuellen mobilen Benutzer-Endgeräten und in kollektiv mobilen Benutzernetzwerken ist unabhängig von der Art der Anwendung, vom Benutzer-Endgerät und vom verfügbaren Zugangsfunknetz;
- es ist keine Modifikation des Benutzer-Endgerätes nötig; und
- es ist keine Modifikation allgemein gebräuchlicher Anwendungen nötig und es sind keine speziellen Anwendungen auf dem Benutzer-Endgerät erforderlich.

## Patentansprüche

1. Verfahren zur Ausführung von auf dem Internet-Protokoll (IP) basierten Anwendungen mit Dienstgüte (QoS; Quality of Service) in einem mehrere verschiedene Zugangsfunknetze, wie z.B. GSM, enthaltenden, heterogenen Zugangsfunknetz auf Benutzer-Endgeräten, die individuell mobil sind oder einem kollektiv mobilen Benutzernetzwerk (mobiles LAN; mobiles Local Area Network) angehören, **dadurch gekennzeichnet, dass** bei der Bereitstellung der Dienstgüte (QoS; Quality of Service) Erweiterungen der Dienstgüte bzw. von Dienstgüte-Parametern für Anwendungen, die von einem Benutzer zur Durchführung in dessen Benutzer-Endgerät gewünscht werden, auf einer jeweils zugeordneten Übergangseinheit (IWU; Interworking Unit) ausgeführt werden, ohne dass eine Initialisierung vom jeweiligen Benutzer-Endgerät aus vorgenommen wird, wobei die Übergangseinheit (IWU), die zwischen dem Benutzer-Endgerät bzw. dem kollektiv mobilen Benutzernetzwerk auf der einen Seite und Übertragungseinrichtungen der Zugangsfunknetze auf der anderen Seite liegt, außerdem Mobilitätsmanagementaufgaben übernimmt und dafür sorgt, dass aktive Datenverbindungen beim Wechsel des Benutzer-Endgeräts bzw. des kollektiv mobilen Benutzernetzwerkes von einem Zugangsfunknetz zu einem anderen ohne Benutzereingriff aufrechterhalten werden.

2. Verfahren nach Anspruch 1, **dadurch gekennzeichnet, dass** die Übergangseinheit (IWU) als Web-Benutzerportal eingesetzt und als HTTP-Server verwendet wird und dass das Web-Benutzerportal Plug-In-Komponenten auf den Web-Browsern der Benutzer-Endgeräte nach erfolgreicher Durchführung des Anmelde-Verfahrens startet.

3. Verfahren nach Anspruch 2, **dadurch gekennzeichnet, dass** mittels des Web-Benutzerportals auf der Übergangseinheit (IWU) abhängig von den verfügbaren Zugangsfunknetzen eine Liste von Dienstgüten oder von Dienstgüte-Parametern zur Verfügung gestellt wird, die mit lokal auf dem jeweiligen Benutzer-Endgerät installierten Anwendungen verknüpft werden können.

4. Verfahren nach Anspruch 2, **dadurch gekennzeichnet, dass** mittels des Web-Benutzerportals auf der Übergangseinheit (IWU) eine Auswahlliste von allgemein gebräuchlichen Anwendungen mit voreingestellten Dienstgüte-Parametern zur Verfügung gestellt wird und dass bei der benutzerseitigen Wahl einer Anwendung aus dieses Auswahlliste die Ausführbarkeit der gewählten Anwendung auf dem betreffenden Benutzer-Endgerät geprüft wird.

5. Verfahren nach einem der vorhergehenden Ansprüche, **dadurch gekennzeichnet, dass** nach einer von seiten eines Benutzers vorgenommenen Startauslösung einer Anwendung mit Dienstgüte über die Übergangseinheit (IWU) die verfügbaren Zugangsfunknetze auf die Verfügbarkeit der geforderten Dienstgüte untersucht werden, dass dabei von der Übergangseinheit (IWU) abhängig vom jeweiligen Zugangsfunknetz die im betreffenden Zugangsfunknetz verwendeten Dienstgüteprozeduren ausgeführt werden, und dass bei Verfügbarkeit der geforderten Dienstgüte mittels Rückmeldung von der Übergangseinheit (IWU) zum Benutzer-Endgerät bei letzterem die entsprechende Anwendung effektiv gestartet wird.

6. Verfahren nach einem der vorhergehenden Ansprüche, **dadurch gekennzeichnet, dass** notwendige Ergänzungen und Änderungen, die auf Grund von Dienstgüteprozeduren auf den IP-Paketen dieser Anwendung gemacht werden müssen, z.B. das Verändern oder Einfügen eines Priorisierungsfeldes (ToS; Type of Service), beim Passieren dieser Pakete auf der Übergangseinheit (IWU) vorgenommen werden.

7. Verfahren nach einem der Ansprüche 1 bis 5, **dadurch gekennzeichnet, dass** notwendige Ergänzungen und Änderungen, die auf Grund von Dienstgüteprozeduren auf den IP-Paketen dieser Anwendung gemacht werden müssen, durch eine Filterfunktion, die beim Aufruf von Anwendungen mit Dienstgüte von der Übergangseinheit (IWU) auf das Benutzer-Endgerät installiert und lokal auf dem Benutzer-Endgerät ausgeführt wird, vorgenommen wird.
